# EUROPÄISCHE PATENTSCHRIFT

(11) **EP 1 016 449 B1**
(45) Veröffentlichungstag und Bekanntmachung des Hinweises auf die Patenterteilung: **03.09.2003**
(21) Anmeldenummer: 99125287.5
(22) Anmeldetag: 18.12.1999
(51) Int. Cl.: B01D 63/08, B01D 53/22, B01D 46/02

(54) **Filtertasche, Filtereinsatz mit solchen Filtertaschen und Verfahren zur Herstellung eines solchen Filtereinsatzes**
Filter pocket, filter insert with such a filter pocket and process for making such a filter insert
Poche filtrante, cartouche filtrante contenant une telle poche filtrante et procédé pour la fabrication d'une telle cartouche filtrante

(30) Priorität: 09.03.1999 DE 19910974; 04.10.1999 DE 19947663; 28.12.1998 DE 19859946
(43) Veröffentlichungstag der Anmeldung: 05.07.2000
(73) Patentinhaber: Weise, Ulrich, Dipl.-Ing., 35510 Butzbach (DE)
(72) Erfinder: Weise, Ulrich, Dipl.-Ing., 35510 Butzbach (DE)
(74) Vertreter: Schlagwein, Udo, Dipl.-Ing.

(56) Entgegenhaltungen:
- EP-A- 0 108 426
- US-A- 3 943 057

## Beschreibung

Die Erfindung betrifft eine für einen eine Vielzahl von auf geringem gegenseitigen Abstand gehaltenen Filtertaschen aufweisenden Filtereinsatz ausgebildete Filtertasche, deren Innenraum einen Filtratabfluss zum Verbinden mit einem Filtratauslass hat und bei der beidseitig auf einer Grundplatte ein geschlossener Rahmen angeordnet ist, gegen den jeweils ein Filtermedium anliegt. Weiterhin betrifft die Erfindung einen Filtereinsatz mit solchen Filtertaschen und ein Verfahren zur Herstellung eines solchen Filtereinsatzes.

Filtertaschen der vorstehenden Art sind beispielsweise in Filtereinsätzen von Membranfiltern zur Ultrafiltration von Flüssigkeiten vorhanden. Sie können jedoch auch für andere Anwendungsfälle angewandt werden, beispielsweise zur Abwasserklärung oder zur Luft- oder Gasreinigung. Unter der Bezeichnung "Filtratauslass" ist dann sinngemäß "Reingasauslass" oder "Reinluftauslass" zu verstehen.

Die DE 36 01 909 zeigt eine Filtertasche der eingangs genannten Art. Bei ihr ist der Rahmen jeweils als umlaufende Dichtung ausgebildet. Der Filtratabfluss erfolgt über obere und untere Kanalbohrungen, welche in den einzelnen Grundplatten und Dichtungen quer zur Ebene der Grundplatte und Dichtungen verlaufen. Durch eine Vielzahl von aufeinanderliegenden Grundplatten mit Dichtungen und dem Filtermedium entsteht ein Filterpaket, bei dem der Filtratausfluss an einer Stirnseite angeordnet ist.

Bei einem bekannten Filtereinsatz, welcher für Filter zur Ultrafiltration zur Keim- und Feststoffabtrennung aus Abwasser bestimmt ist, werden die Filtertaschen von zwei Drainagestiften durchdrungen, in die das Filtrat aus dem Inneren der Filtertaschen zu gelangen vermag und durch die es zu einem Filtratauslass gelangt. Die beiden Drainagestifte haben hierzu in ihrer Mantelfläche Durchlässe. In den Bereichen zwischen den Filtertaschen werden die Drainagestifte von Distanzgummiteilen umschlossen, so dass dort keine Flüssigkeit in die Drainagestifte gelangen kann.

Durch die beiden Drainagestifte und die Distanzgummiteile sind die bekannten Filtereinsätze verhältnismäßig aufwendig gestaltet. Weiterhin haben sie einen relativ hohen Druckverlust, weil für den Filtratabfluss nur verhältnismäßig geringe Querschnitte zur Verfügung stehen.

Der Erfindung liegt das Problem zugrunde, eine Filtertasche der eingangs genannten Art so auszubilden, dass sie besonders einfach gestaltet ist und das Filtrat mit besonders geringem Druckverlust abgezogen werden kann. Weiterhin sollen ein Filtereinsatz mit einer solchen Filtertasche und ein Verfahren zur Herstellung eines solchen Filtereinsatzes geschaffen werden.

Das erstgenannte Problem wird erfindungsgemäß dadurch gelöst, dass der Filtratabfluss durch mehrere, an einer Längsseite der Grundplatte vorgesehene, kammartige Einbuchtungen gebildet ist, welche von der Längsseite hinter die Rahmen bis in den Innenraum der Filtertasche führen.

Eine solche Filtertasche ist äußerst einfach aufgebaut und hat einen besonders geringen Strömungswiderstand für das abzuziehende Filtrat. Ein weiterer Vorteil liegt darin, dass jede Filtertasche für sich dicht ist und beim Zusammensetzen mehrerer Filtertaschen zu einem Paket keine Dichtungsprobleme auftreten.

Ganz besonders kostengünstig ist die Filtertasche herstellbar, wenn die Grundplatte mit den Rahmen als ein einstückiges Kunststoffteil ausgebildet ist.

Die einzelnen Filtertaschen können durch einfaches Zusammenstecken zu einem Paket miteinander verbunden werden, wenn gemäß einer anderen Weiterbildung der Erfindung die Grundplatte an einer Seite nahe ihrer Oberkante und Unterkante aus der Ebene der Filtertasche vorspringende Steckvorsprünge und auf der gegenüberliegenden Seite entsprechende Steckaufnahmen hat.

Hierbei ist es vorteilhaft, wenn die Steckvorsprünge als Stege und die Steckaufnahmen als entsprechende Nuten ausgebildet sind.

Schon eine einzelne Filtertasche ist für sich funktionstüchtig und kann beispielsweise in ein Gewässer eingesetzt werden, um Trinkwasser zu gewinnen, wenn die Einbuchtungen mit einem an der Grundplatte und den Rahmen angeformten Filtratsammelraum Verbindung haben.

Die Merkmale des erfindungsgemäßen Filtereinsatzes und Herstellungsverfahrens ergeben sich aus den entsprechenden Ansprüchen und der nachfolgenden Beschreibung. Zur näheren Erläuterung der Erfindung wird nachfolgend auf die Zeichnung Bezug genommen. Diese zeigt in
- Fig.1: einen Längsschnitt durch einen Filtereinsatz nach der Erfindung,
- Fig.2: eine Ansicht von unten auf den Filtereinsatz bei abgenommener Verschlussplatte,
- Fig.3: eine Explosionsdarstellung einer Filtertasche des Filtereinsatzes,
- Fig.4: eine Vorderansicht einer Filtertasche,
- Fig.5: einen Längsschnitt durch eine Tragplatte einer zweiten Ausführungsform eines Filtereinsatzes,
- Fig.6: eine Draufsicht auf die Tragplatte,
- Fig.7: eine Vorderansicht der Tragplatte,
- Fig.8: eine Seitenansicht der Tragplatte,
- Fig.9: eine Vorderansicht einer zweiten Ausführungsform einer Filtertasche,
- Fig.10: eine Ansicht von unten auf die Filtertasche,
- Fig.11: einen im Maßstab gegenüber den vorangehenden Figuren stark vergrößerten Querschnitt durch eine Filtertasche.

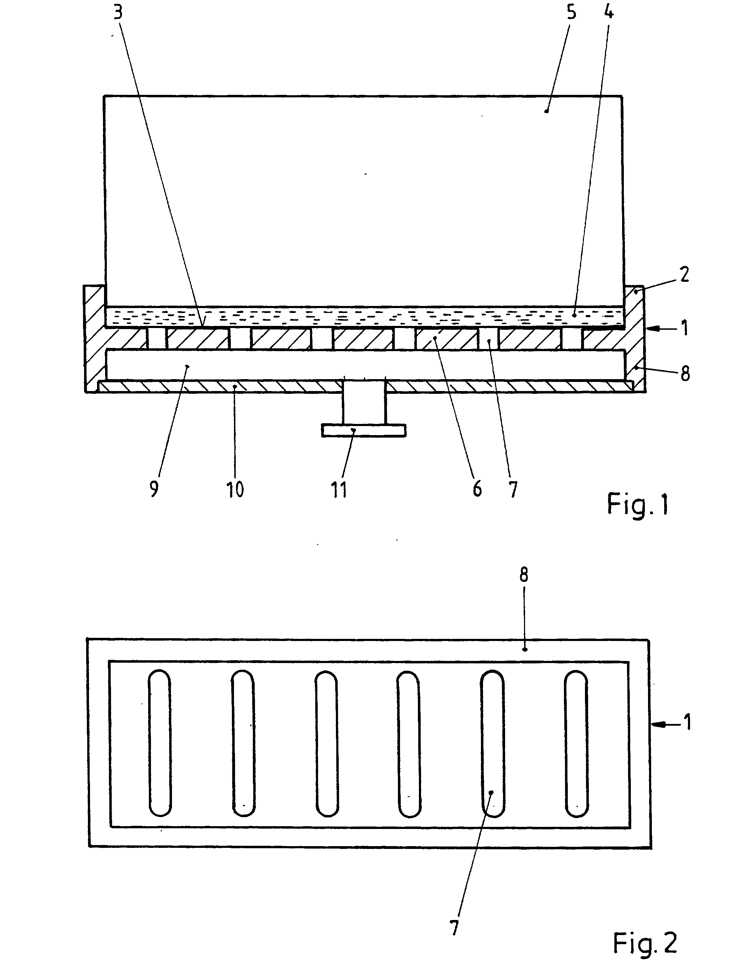

Die Figur 1 zeigt eine Tragplatte 1, welche durch einen nach oben hin gerichteten, umlaufenden Rand 2 an ihrer in Figur 1 gesehen oberen Seite als nach oben hin offener Trog 3 ausgebildet ist. In diesen Trog 3 ist ein Gießharz 4 eingefüllt. Anschließend wurde eine Vielzahl von Filtertaschen 5 mit geringem Abstand zueinander in das Gießharz 4 dieses Troges 3 eingesetzt.

Der Trog 3 hat einen Boden 6 mit mehreren, quer zu den Filtertaschen 5 verlaufenden Durchbrechungen 7, welche nach dem Einsetzen der Filtertaschen 5 und nach dem Aushärten des Gießharzes 4 durch Fräsen hergestellt wurden. Zur Unterseite hin hat der Boden 6 eine umlaufende Wand 8, die zur Seite hin eine Filtratsammelkammer 9 begrenzt. Nach unten hin ist die Filtratsammelkammer 9 durch eine Verschlussplatte 10 verschlossen, die einen Filtratauslass 11 aufweist.

Die in Figur 2 gezeigte Ansicht der Tragplatte 1 von unten ohne die Verschlussplatte 10 lässt erkennen, dass die Durchbrechungen 7 jeweils nahezu über die gesamte Breite der Tragplatte 1 verlaufen.

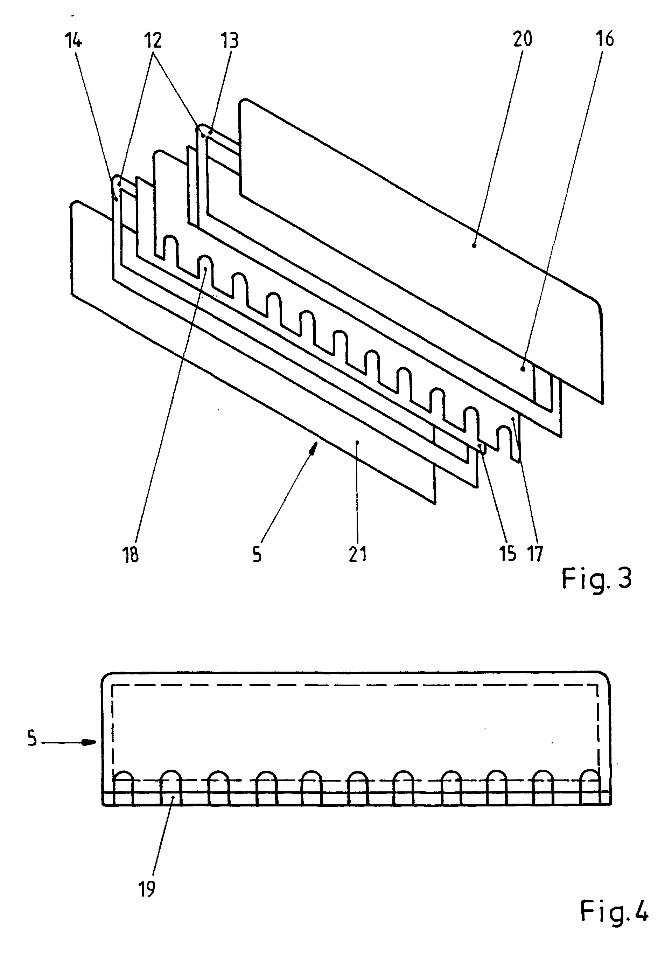

Die Gestaltung der Filtertaschen 5 ergibt sich aus Figur 3. Die Filtertaschen 5 haben einen geschlossenen Rahmen 12, welcher aus zwei Rahmenteilen 13, 14 besteht. Diese Rahmenteile 13, 14 liegen im montierten Zustand dichtend unter Zwischenschaltung jeweils eines Stützgewebes 15, 16 auf jeder Seite einer Grundplatte 17 auf. Diese Grundplatte 17 hat an einer Längsseite kammartig nebeneinander Einbuchtungen 18, welche weiter in die Grundplatte 17 hineinreichen als die Rahmenteile 13, 14 jeweils stark sind. Dadurch bilden die Einbuchtungen 18 im montierten Zustand der Teile in Figur 4 gezeigte Durchlässe 19. Außenseitig auf die Rahmenteile 13, 14 ist jeweils ein Filtermedium 20, 21 befestigt, bei dem es sich zum Beispiel um eine Membran für die Ultrafiltration handeln kann. Die Durchlässe 19 verlaufen jeweils dort, wo sich in den Figuren 1 und 2 die Durchbrechungen 7 befinden.

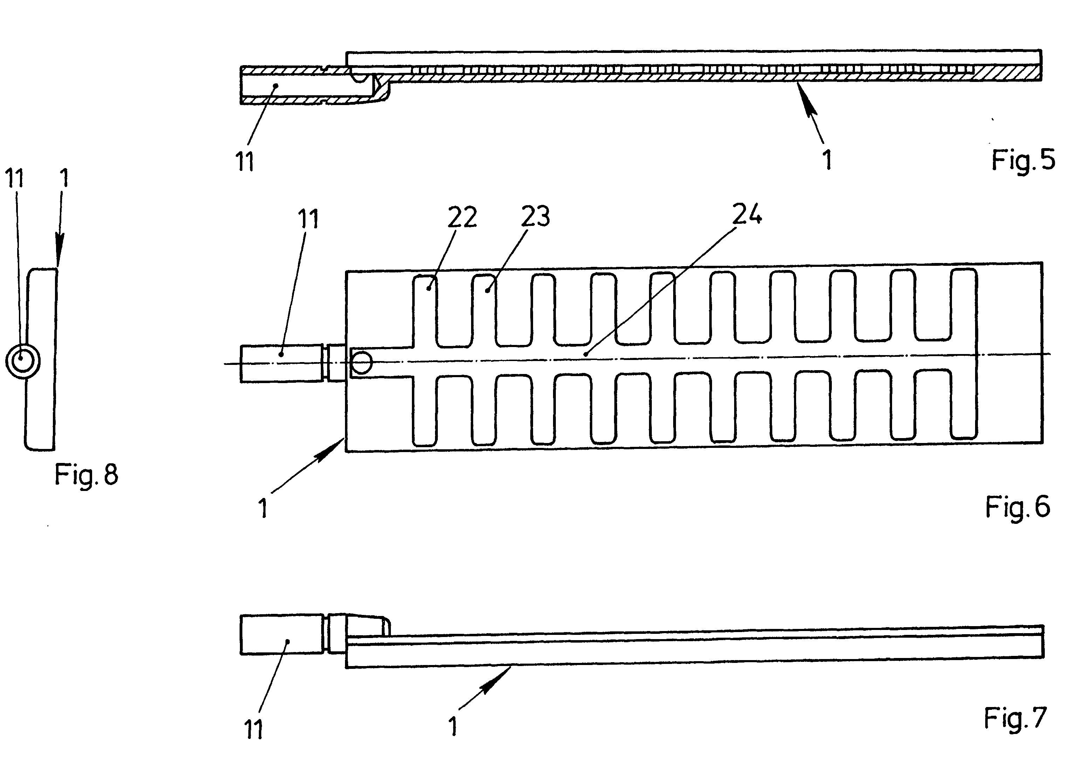

Bei der Ausführungsform nach den Figuren 5 bis 8 sind, was die Figur 6 besonders deutlich zeigt, in der Tragplatte 1 eine Vielzahl von in Querrichtung verlaufenden Rillen 22, 23 vorgesehen, welche alle in eine mittige, in Längsrichtung verlaufende Rille 24 münden. Diese mittige Rille 24 hat Verbindung mit dem Filtratauslass 11, der bei dieser Ausführungsform in der Ebene der Tragplatte 1 verläuft und an einer ihrer beiden Stirnseiten angeordnet ist. Hierdurch kann man einen aus Filtertaschen 5 gebildeten Filtereinsatz besser in ein Gehäuse einschieben als einen Filtereinsatz mit einem quer zu seiner Haupterstreckungsebene ausgerichteten Filtratauslass. Die einzelnen Filtertaschen 5 werden bei dieser Ausführungsform dichtend nebeneinander auf der Tragplatte 1 aufgeschweißt.

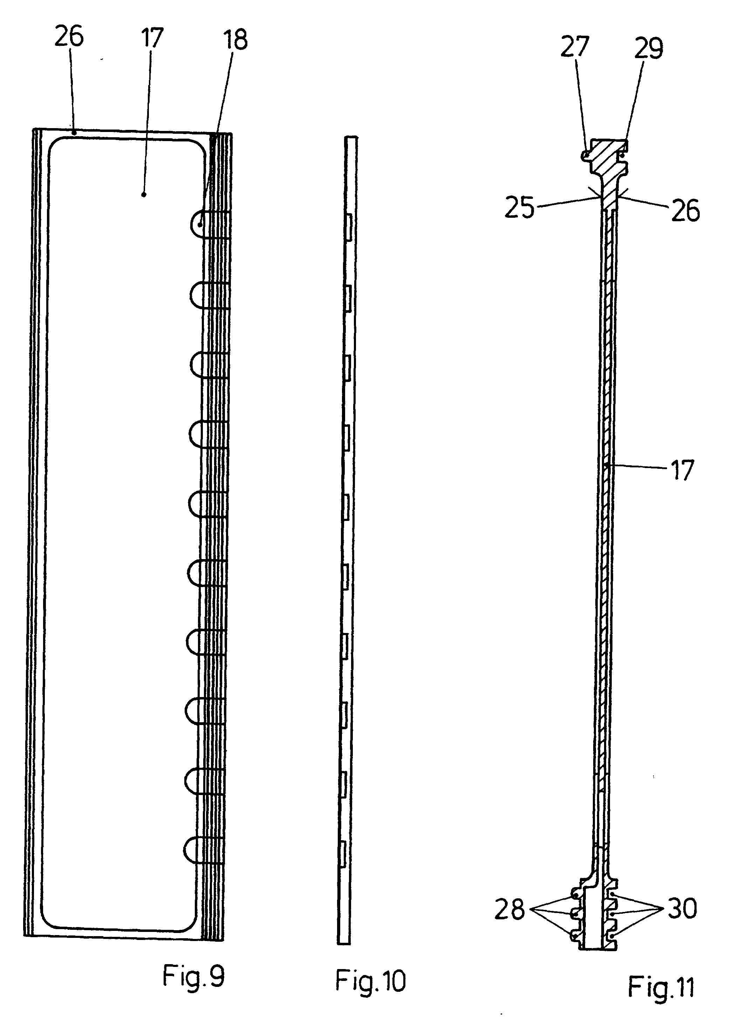

Die Filtertasche nach den Figuren 9 bis 11 unterscheidet sich von der zuvor beschriebenen dadurch, dass die Grundplatte 17 mit den Rahmen 25, 26 als einstückiges Kunststoffteil ausgebildet ist. Die kammartigen Einbuchtungen 18 sind ausschließlich in der Grundplatte 17 vorgesehen und führen unter den Rahmen 25, 26 hindurch in den von den Rahmen 25, 26 umschlossenen Innenraum.

Die Figur 11 lässt erkennen, dass an den Grundplatten 17 nahe ihrer jeweiligen Oberkante und Unterkante Steckvorsprünge 27, 28 vorgesehen sind, welche mit Steckausnehmungen 29, 30 auf ihrer gegenüberliegenden Seite fluchten. Durch diese Ausbildung kann man die einzelnen Grundplatten 17 und damit die Filtertaschen 5 durch einfaches Zusammenstecken zu einem Paket miteinander verbinden.

### Bezugszeichenliste

- 1: Tragplatte
- 2: Rand
- 3: Trog
- 4: Gießharz
- 5: Filtertasche

- 6: Boden
- 7: Durchbrechung
- 8: Wand
- 9: Filtratsammelkammer
- 10: Verschlussplatte

- 11: Filtratauslass
- 12: Rahmen
- 13: Rahmenteil
- 14: Rahmenteil
- 15: Stützgewebe

- 16: Stützgewebe
- 17: Grundplatte
- 18: Einbuchtung
- 19: Durchlass
- 20: Filtermedium

- 21: Filtermedium
- 22: Rille
- 23: Rille
- 24: Rille
- 25: Rahmen

- 26: Rahmen
- 27: Steckvorsprung
- 28: Steckvorsprung
- 29: Steckausnehmung
- 30: Steckausnehmung

## Patentansprüche

1. Für einen eine Vielzahl von auf geringem gegenseitigen Abstand gehaltenen Filtertaschen aufweisenden Filtereinsatz ausgebildete Filtertasche, deren Innenraum einen Filtratabfluss zum Verbinden mit einem Filtratauslass hat und bei der beidseitig auf einer Grundplatte ein geschlossener Rahmen angeordnet ist, gegen den jeweils ein Filtermedium anliegt, **dadurch gekennzeichnet, dass** der Filtratabfluss durch mehrere, an einer Längsseite der Grundplatte (17) vorgesehene, kammartige Einbuchtungen (18) gebildet ist, welche von der Längsseite hinter die Rahmen (12; 25, 26) bis in den Innenraum der Filtertasche (5) führen.

2. Filtertasche nach Anspruch 1, **dadurch gekennzeichnet, dass** die Grundplatte (17) mit den Rahmen (25, 26) als ein einstückiges Kunststoffteil ausgebildet ist.

3. Filtertasche nach den Ansprüchen 1 oder 2, **dadurch gekennzeichnet, dass** die Grundplatte (17) an einer Seite nahe ihrer Oberkante und Unterkante aus der Ebene der Filtertasche (5) vorspringende Steckvorsprünge und auf der gegenüberliegenden Seite entsprechende Steckaufnahmen hat.

4. Filtertasche nach Anspruch 3, **dadurch gekennzeichnet, dass** die Steckvorsprünge als Stege und die Steckaufnahmen als entsprechende Nuten ausgebildet sind.

5. Filtertasche nach zumindest einem der vorangehenden Ansprüche, **dadurch gekennzeichnet, dass** die Einbuchtungen mit einem an der Grundplatte und den Rahmen angeformten Filtratsammelraum Verbindung haben.

6. Filtereinsatz mit einer Filtertasche nach zumindest einem der vorangehenden Ansprüche, **dadurch gekennzeichnet, dass** die Filtertaschen (5) stehend nebeneinander auf einer Tragplatte (1) angeordnet sind, welche oberhalb eines Filtratsammelraumes (9) einen Boden (6) mit quer zu den Filtertaschen (5) im Bereich der Einbuchtungen (18) verlaufenden Durchbrechungen (7) hat.

7. Filtereinsatz nach Anspruch 6, **dadurch gekennzeichnet, dass** die Tragplatte (1) einen mit Gießharz (4) verfüllten Trog (3) hat, in welchem die Filtertaschen (5) dichtend eingesetzt sind.

8. Filtereinsatz nach zumindest einem der vorangehenden Ansprüche, **dadurch gekennzeichnet, dass** der Filtratsammelraum (9) an einer Stirnseite einen in der Ebene der Filtertasche (5) verlaufenden Filtratauslass (11) hat.

9. Filtereinsatz nach zumindest einem der vorangehenden Ansprüche, **dadurch gekennzeichnet, dass** die Filtratsammelkammer (9) durch eine umlaufende Wand (8) der Tragplatte (1) und eine darauf gehaltene, den Filtratauslass (11) aufweisende Verschlussplatte (10) gebildet ist.

10. Filtereinsatz nach zumindest einem der vorangehenden Ansprüche, **dadurch gekennzeichnet, dass** die Tragplatte (1) in Querrichtung verlaufende Rillen (22, 23) hat, welche mit einer in Längsrichtung verlaufenden Rille (24) Verbindung haben, die mit dem Filtratauslass (11) verbunden ist.

11. Verfahren zur Erzeugung eines Filtereinsatzes gemäß zumindest einem der Ansprüche 6 bis 10, welcher eine Vielzahl von auf geringem gegenseitigen Abstand gehaltenen Filtertaschen hat, deren Innenräume über Durchlässe mit einem gemeinsamen Filtratauslass in Verbindung stehen, **dadurch gekennzeichnet, dass** die Filtertaschen stehend nebeneinander in einem mit Gießharz verfüllten Trog einer Tragplatte eingesetzt werden und dass anschließend in den Boden des Troges quer zu den Filtertaschen im Bereich der Durchlässe Durchbrechungen erzeugt werden, die mit dem Inneren der Filtertaschen Verbindung haben.

12. Verfahren nach Anspruch 11, **dadurch gekennzeichnet, dass** die Durchlässe der Filtertaschen vor dem Einsetzen in das Gießharz mit einem bei niedrigen Temperaturen schmelzenden Material verschlossen werden.

## Claims

1. For a filter plate, mounted repeatedly one close to the other, forming a filter insert, whose interior has a filtrate discharge to connect to a filtrate outlet, said filter plate comprising a close frame attached on a basic plate and connected with a filter media, **characterised in that** the filtrate discharge is formed by several comb-like inlets (18) on the longitudinal side of the basic plate (17) extending from the longitudinal side behind the frames (12, 25, 26) to the interior of the filter plates (5).

2. A filter plate according to claim 1 wherein the basic plate (17) with the frames (25, 26) is formed by one piece of plastic material.

3. A filter plate according to claim 1 or 2 wherein the basic plate (17) on one side near the upper and lower edge has projecting joints and on the opposite side corresponding joint grooves.

4. A filter plate according to claim 3 wherein the projecting joints are formed as tenons and the joint grooves as corresponding mortises.

5. A filter plate according to any one of claims 1 to 4 **characterised in that** the comblike inlets are connected with a filtrate collector attached on basic plate and frame.

6. A filter insert with a filter plate according to any one of claims 1 to 5, **characterised in that** the filter plates (5) are mounted standing side by side on a support plate (1) with a bottom (6) above the filtrate collector (9), said bottom having openings (7) right-angled to the filter plates (5) in the area of the comblike inlets (18).

7. A filter insert according to claim 6, wherein the support plate (1) has a trough (3) filled with resin, where the filter plates (5) are mounted tightly.

8. A filter insert according to any one of claims 1 to 7 **characterised in that** the filtrate collector (9) has a filtrate outlet (11) on the front side in the plane of the filter plate (5).

9. A filter insert according to any one of claims 1 to 8 **characterised in that** the filtrate collector (9) is formed by a surrounding wall (8) of the support plate (1) and by a cover plate (10) mounted to it and provided with the filtrate outlet (11).

10. A filter insert according to any one of claims 1 to 9 **characterised in that** the support plate (1) has transverse grooves (22, 23) which are connected to a longitudinal groove (24) connected with the filtrate outlet (11).

11. Production procedure of a filter insert comprising a plurality of filter plates mounted one close to the other, whose interior is connected to a common filtrate outlet by passages, **characterised in that** the filter plates are mounted standing side by side in a trough of a support plate filled with resin and that afterwards in the area of the passages holes are created in the bottom of the trough in transverse direction to the filter plates, which are connected to the filter plates interior.

12. Procedure according to claim 11, wherein the passages of the filter pockets, before fixing them into the resin, are closed with a material melting at low temperatures.

## Revendications

1. Pour une poche filtrante, qui, montée à un nombre élevé et avec une moindre distance l'une à côté de l'autre, forme une cartouche filtrante, dont l'intérieur possède une décharge de filtrat à joindre avec une sortie de filtrat et qui présente un cadre fermé disposé sur une plaque de base et lié avec un moyen filtrant, **caractérisée en ce que** la décharge de filtrat est formée de plusieurs rentrantes (18) en forme de peigne disposées àu côté longitudinale de la plaque de base (17) qui s'étendent du côté longitudinale derrière les cadres (12, 25, 26) jusqu'à l'intérieur de la poche filtrante (5).

2. Poche filtrante selon la revendication 1, **caractérisée en ce que** la plaque de base (17) avec les cadres (25, 26) est formée d'une seule pièce en matière plastique.

3. Poche filtrante selon les revendications 1 ou 2, **caractérisée en ce que** la plaque de base (17), d'un côté près de son bord supérieur et inférieur, présente des avancements à fiches débordants et, du côté en face, des prises à fiches correspondantes.

4. Poche filtrante selon la revendication 3, **caractérisée en ce que** les avancements à fiches sont construits comme languettes et les prises à fiches comme rainures correspondantes.

5. Poche filtrante selon l'une quelconque des revendications 1 a 4, **caractérisée en ce que** les rentrantes en forme de peigne sont unies avec une chambre collecteur de filtrat attachée à la plaque de base et au cadre.

6. Cartouche filtrante avec une poche filtrante selon l'une quelconque des revendications 1 a 5, **caractérisée en ce que** les poches filtrantes (5) sont disposées verticalement l'une à côté de l'autre sur une plaque de support (1), qui, au-dessus d'une chambre collecteur de filtrat (9) possède un fond (6) avec des ouvertures (7) qui s'étirent en sens transversal aux poches filtrantes (5) dans la zone des rentrantes en forme de peigne (18).

7. Cartouche filtrante selon la revendication 6, **caractérisée en ce que** la plaque de support (1) possède un auge (3) rempli avec de la résine coulée (4), dans lequel les poches filtrantes (5) sont diposées formant une jonction étanche.

8. Cartouche filtrante selon l'une quelconque des revendications 1 a 7, **caractérisée en ce que** la chambre collecteur de filtrat (9) présente une sortie de filtrat (11) disposée au front, dans le plan de la poche filtrante (5).

9. Cartouche filtrante selon l'une quelconque des revendications 1 a 8, **caractérisée en ce que** la chambre collecteur de filtrat (9) est formée d'une paroi (8) encloisonante la plaque de support (1) et d'une plaque de fermeture (10) unie avec la paroi et munie de la sortie de filtrat (11).

10. Cartouche filtrante selon l'une quelconque des revendications 1 a 9, **caractérisée en ce que** la plaque de support (1) possède des rainures transversales (22, 23) qui ont une connexion avec une rainure longitudinale (24) unie à la sortie de filtrat (11).

11. Procédé pour la fabrication d'une cartouche filtrante, qui possède un nombre élevé de poches filtrantes montées à une moindre distance l'une à côté de l'autre et dont l'intérieur, par des passages, est uni avec une sortie commune de filtrat, **caractérisé en ce que** les poches filtrantes sont insérées verticalement l'une à côté de l'autre dans un auge d'une plaque de support, rempli avec de la résine coulée, et **en ce que** ensuite, au secteur des passages, sont appliquées des ouvertures qui s'étendent en sens transversal aux poches filtrantes et qui sont unies avec l'intérieur des susdites poches.

12. Procédé selon la revendication 11, **caractérisé en ce que** les passages des poches filtrantes, avant leur mise dans la résine coulée, sont fermées avec un matériau à bas point de fusion.
